(19) Europäisches Patentamt / European Patent Office / Office européen des brevets

(11) **EP 2 735 735 A1**

(12) **DEMANDE DE BREVET EUROPEEN**

(43) Date de publication:
28.05.2014 Bulletin 2014/22

(51) Int Cl.:
*F03D 11/04* (2006.01)

(21) Numéro de dépôt: **13306450.1**

(22) Date de dépôt: **22.10.2013**

| | |
|---|---|
| (84) Etats contractants désignés:<br>**AL AT BE BG CH CY CZ DE DK EE ES FI FR GB GR HR HU IE IS IT LI LT LU LV MC MK MT NL NO PL PT RO RS SE SI SK SM TR**<br>Etats d'extension désignés:<br>**BA ME** | (71) Demandeur: **IFP Energies nouvelles**<br>**92852 Rueil Malmaison Cedex (FR)**<br><br>(72) Inventeur: **Gilloteaux, Jean-Christophe**<br>**92500 Rueil Malmaison (FR)** |
| (30) Priorité: **22.11.2012 FR 1203144** | |

(54) **Éolienne offshore comportant un support flottant optimisé**

(57) - La présente invention concerne une éolienne offshore sur support flottant (1). Le support flottant comporte en combinaison:
- un flotteur principal (1) de forme sensiblement cylindrique,
- une masse fixe (5) à la base du flotteur,
- au moins deux éléments circulaires (2, 3) de diamètre supérieur au diamètre du flotteur principal et espacés d'une distance L,
- des caissons de ballastage (4) inclus dans le flotteur principal, et répartis en couronne à la périphérie dudit flotteur.

Figure 1

EP 2 735 735 A1

**Description**

La présente invention concerne le domaine des éoliennes offshores, en particulier les éoliennes montées sur un support flottant amarré au fond de la mer. Un des problèmes que se propose de résoudre l'invention est la stabilité du mat de l'éolienne afin que le plan des pales reste dans une position optimale pour la fourniture de la puissance, et dans les meilleures conditions.

Divers supports flottants dédiés à l'installation d'éoliennes de plusieurs mégawatt au large des côtes sont en cours de développement dans de nombreux pays. Selon la profondeur du site considéré, plusieurs options de conception sont envisageables. Malgré leur grande diversité, trois grandes familles de support flottant se dégagent selon la nature du couple de redressement hydrostatique employé. On peut citer :

- les flotteurs de type SPAR caractérisés par une forme géométrique élancée et comportant un ballast important afin d'abaisser au maximum le centre de gravité de l'ensemble de la structure dans le but d'assurer la stabilité,

- les supports de type TLP (Tension Leg Platform) qui ont la particularité d'être amarrés au fond de la mer par des câbles tendus garantissant la stabilité de la structure,

- les flotteurs de type semi-submersible qui présentent un moment d'inertie à la surface de flottaison important leur procurant ainsi un couple de redressement suffisant à leur stabilité.

En terme de redressement hydrostatique, les flotteurs de type barge sont à ranger dans la catégorie des plateformes semi-submersibles de part leur surface à la flottaison importante, mais diffèrent cependant de ces dernières de part leur aspect beaucoup plus compacte.

Cependant, dans le domaine des éoliennes offshore, qui présentent en particulier des élancements aériens très important, les supports flottant classiques ne sont pas toujours adaptés aux contraintes de fonctionnement du rotor. Les éoliennes offshore étant, d'une part sensibles à l'inclinaison de leur axe de rotation et d'autre part, aux accélérations importantes au niveau de la nacelle, tout le travail de conception des supports flottant réside donc à satisfaire au moins ces deux contraintes tout en évitant d'avoir un coût prohibitif.

Ainsi, la présente invention concerne une éolienne offshore sur support flottant, **caractérisée en ce que** ledit support comporte en combinaison:

- un flotteur principal de forme sensiblement cylindrique,
- une masse fixe à la base du flotteur,
- au moins deux éléments circulaires de diamètre supérieur au diamètre du flotteur principal et espacés d'une distance L,
- des caissons de ballastage inclus dans le flotteur principal, et répartis en couronne à la périphérie dudit flotteur.

Éolienne offshore sur support flottant dans laquelle un des éléments circulaires peut être placé à la base du flotteur principal.

Éolienne dans laquelle la distance L peut être déterminée pour obtenir un amortissement et une période propre en pilonnement optimaux compte tenu principalement de la géométrie et de la répartition du poids du support flottant.

Éolienne offshore sur support flottant dans laquelle un système d'ancrage funiculaire peut la maintenir en place.

Éolienne offshore sur support flottant dans laquelle l'axe des pales peut être horizontal ou vertical.

La présente invention sera mieux comprise et ses avantages apparaitront plus clairement à la lecture de la description qui suit d'un mode de réalisation préféré, nullement limitatif et illustré par les figures ci-après annexées, parmi lesquelles:

- la figure 1 montre schématique l'ensemble éolienne sur son support flottant,
- la figure 2 montre la relation entre l'assiette du support flottant , son diamètre et son tirant d'eau,
- la figure 3a montre la relation entre l'espace L entre les deux jupes et la fréquence de résonance en pilonnement,
- la figure 3b montre la relation entre l'espace L entre les deux jupes et la fréquence de résonance en pilonnement, pour des jupes de différents diamètres,
- les figures 4a et 4b illustrent les caissons de ballastage,
- la figure 5 montre la relation entre les dimensions des caissons et la hauteur de remplissage pour des conditions d'assiette données.

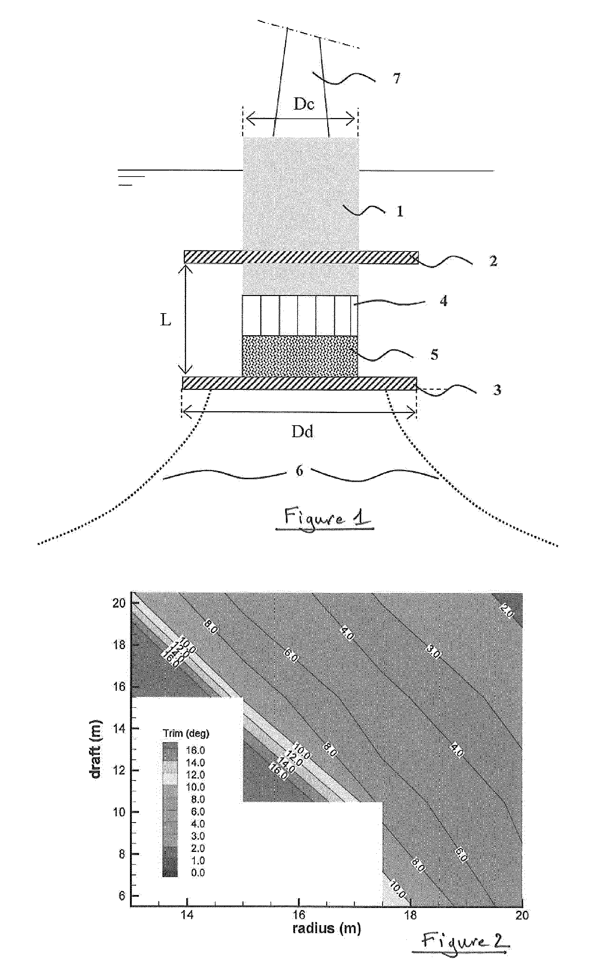

Selon la figure 1, une éolienne représentée par la base de son mat 7 est fixée sur un support flottant. Le support flottant est composé d'un flotteur principal de géométrie cylindrique 1 auquel sont ajoutés deux étages de plaques amortisseurs 2 et 3; aussi appelées "jupes". De préférence, ces plaques sont circulaires, de diamètre Dd supérieur au diamètre Dc du flotteur principal 1. Leur épaisseur est suffisante pour résister aux contraintes mécaniques externes et résulte des modes de réalisation choisis. L'épaisseur des plaques ou "jupes" n'est pas un paramètre principal qui intervient sur la stabilisation de l'éolienne. Un ballast permanent en béton 5 (ou équivalent) est placé en partie basse du flotteur pour régler l'équilibre hydrostatique de l'ensemble support flottant. Au-dessus du ballast permanent 5 des compartiments étanches 4 sont réparties en périphérie du flotteur, formant plusieurs volumes en couronne qui peuvent être remplis ou vidés selon les conditions de fonctionnement de l'éolienne, notamment de la poussée aérodynamique associée. Ainsi, on règle l'angle d'assiette du support flottant. Pour ce faire, le flotteur est équipé d'un circuit de conduites et de pompes permettant de transférer une quantité de liquide dans les différents volumes. Ces moyens non représentés sont à la portée de l'homme du métier.

L'éolienne, qu'elle soit HAWT (Horizontal Axis Wind Turbine) ou VAWT (Vertical Axis Wind Turbine), génère une poussée horizontale induite par le vent, à laquelle s'ajoutent les forces de trainées sur la nacelle et le mât de l'éolienne. Ces forces ont tendance à faire pencher la structure flottante : on parle alors de changement d'angle d'assiette. En modifiant la répartition de liquide dans les compartiments répartis en couronne, on peut faire en sorte qu'aucun changement d'assiette sensible n'apparaisse. Ainsi, l'éolienne peut fonctionner de manière optimale d'un point de vue récupération d'énergie, et d'un point de vue diminution des risques de fatigue des différents composants mécaniques.

La référence 6 représente les amarres de l'éolienne.

En première approximation, le dimensionnement d'une plateforme supportant une éolienne doit satisfaire deux contraintes principales à savoir :

-  avoir un volume immergé suffisant pour supporter le poids de l'éolienne, de son système d'amarrage, ainsi que son propre poids,
-  présenter un couple de redressement suffisant pour pouvoir contenir l'effort maximum de poussée aérodynamique de l'éolienne considéré.

En considérant des déplacements de faible rotation, ces deux contraintes peuvent se traduire mathématiquement par les relations suivantes :

$$\begin{cases} \rho \forall = M_{tot} \\ F_T \cdot \left( H_{hub} + Z_{CG} \right) = \left( \rho \forall g Z_{CB} - M_{tot} g Z_{CG} + \rho g \pi \dfrac{D_c^{\,4}}{8} + C_{55,lignes} \right) \cdot \theta \end{cases}$$

avec

$\rho$ : masse volumique de l'eau (Kg/m$^3$),
g : la gravité (m/s$^2$),
$M_{tot}$ : masse totale de la structure (Kg),
$\forall$ : volume immergé (m$^3$),
$F_T$ :force de poussée aérodynamique au niveau du hub (N),
$H_{hub}$ : altitude du hub (m),
$Z_{CG}$ : position verticale du centre de gravité de l'ensemble de la structure (m),
$Z_B$ : centre de flottaison (m),
$D_c$ : diamètre du flotteur (m),
$D_d$ : diamètre des jupes (m),
$C_{55,\,lignes}$ : raideur en tangage associée à l'amarrage (N.m/rad),
$\theta$ : angle d'assiette (rad).

La Figure 2 montre l'évolution de l'angle d'assiette (Trim) d'un support flottant de forme cylindrique en fonction de son rayon (radius) et de son tirant d'eau (Draft). La zone non colorées correspond aux configurations présentant une hauteur métacentrique négative et donc instables. L'aspect pixélisé de cette zone est dû à la discrétisation utilisée. Ces résultats permettent de rendre compte des différentes configurations possibles selon l'angle d'assiette désiré (Trim). La Figure 2 peut ainsi servir d'abaques pour un pré-dimensionnement de flotteur de géométrie cylindrique. On s'aperçoit ainsi de la grande diversité des supports flottant à iso-redressement hydrostatique. D'un côté des supports flottants de type barge présentant une envergure importante avec un rayon de l'ordre de 20 m et un faible tirant d'eau autour de 5 m. De l'autre côté des supports flottants avec un rayon moindre par rapport au tirant d'eau se rapprochant des caractéristiques des plateformes de type SPAR.

L'ajout de jupes a pour but de décaler la période de résonance en pilonnement, ou mouvement d'oscillation verticale, du support flottant en dehors des périodes prédominantes de houle (de manière générale ces périodes de houle sont contenues dans un spectre s'étalant de 3 s à 20 s) où l'énergie des vagues est principalement concentrée, de sorte à réduire les amplitudes des déplacements verticaux de la structure et ainsi assurer des conditions optimales de fonctionnement du rotor de l'éolienne. Dans le cas d'un flotteur cylindrique et de deux jupes circulaires, cette période de résonance en pilonnement peut être calculée au travers de la relation suivante :

$$T_Z = 2\pi \sqrt{\frac{M_{tot} + m_{add}(\infty)}{K_{HZ}}}$$

qui relie la période de résonance en pilonnement $T_Z$ à la masse totale $M_{tot}$ de la structure (amarrage, éolienne, flotteur), à la masse d'eau ajoutée pour une fréquence infinie $m_{add}(\infty)$ associée ainsi qu'au terme de raideur hydrostatique en pilonnement $K_{HZ}$, avec[i]

$$\begin{cases} K_{HZ} = \rho\pi \dfrac{D_c^2}{4} \\ m_{add} = \dfrac{1}{48}\rho\left(8D_d^3 - 12\pi D_c^2 z - 12\pi D_c^2 L + 12\pi D_d^2 z - 4\pi z^3 + 12\pi D_d^2 L - \pi^3 L^3\right) \\ z = \dfrac{1}{\pi}\sqrt{D_d^2 - D_c^2} \end{cases}$$

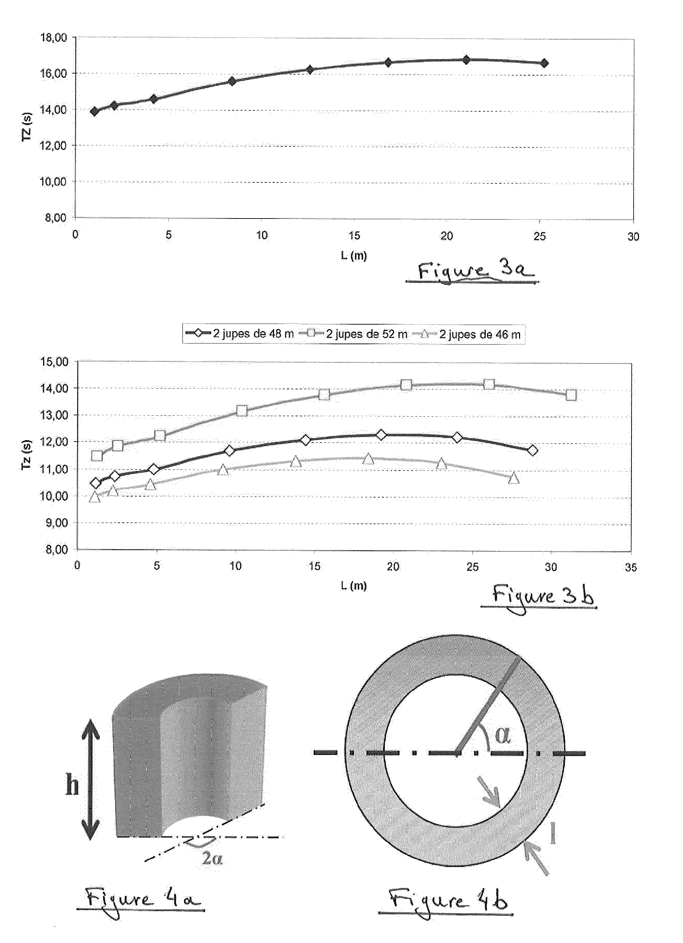

L'espacement $L$ entre les plaques joue un rôle majeur quant à l'efficacité des plaques amortisseurs que ce soit au niveau de l'apport en masse d'eau ajoutée ou sur le détachement tourbillonnaire, et donc sur l'amortissement visqueux. Une étude paramétrique a ainsi consisté à estimer l'espacement optimal nécessaire entre deux plaques amortisseurs suivant leurs diamètres (Figures 3a et 3b).

La figure 3a montre l'influence de l'espacement L de deux plaques amortisseurs sur la période de résonance Tz en pilonnement dans le cas d'un support flottant de forme cylindrique et de plaques circulaires fixée (rayon flotteur : 13 m, tirant d'eau : 20,5 m, rayon des jupes 21 m).

La figure 3b montre l'influence des diamètres de jupes (46, 48, 52 m pour un diamètre de flotteur principal de 26 m de diamètre).

Ces résultats montrent tout d'abord que l'ajout de deux plaques amortisseurs améliorent nettement les performances d'une plateforme du type barge pris en exemple ici. On note donc qu'un choix opportun des principaux paramètres de dimensionnement du flotteur et des jupes permet de décaler efficacement la période de résonance en pilonnement en dehors des périodes prédominantes de houle.

Bien entendu, l'invention ne se limite pas à la combinaison de deux plaques seulement, les cas de 3, ou 4 jupes, ou plus restent dans le domaine de l'invention.

Les Figure 4a et 4b montrent la constitution des ballasts dynamiques. Ils sont sous forme de réservoirs de hauteur $h$, en secteur d'un angle $\alpha$ de couronne en périphérie du flotteur principal, et d'une largeur de réservoir notée $l$.

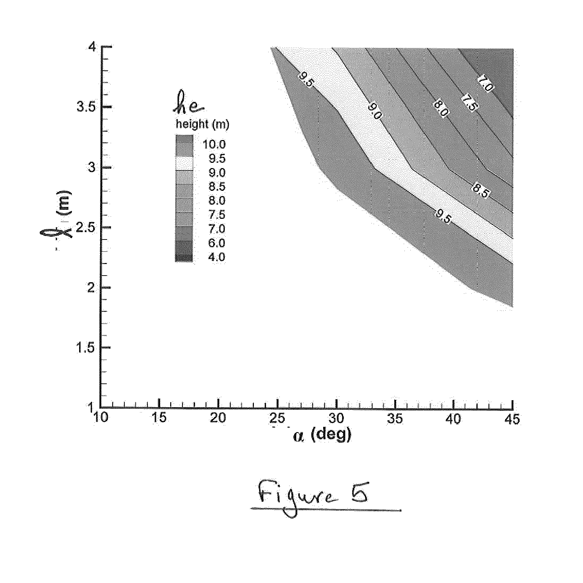

A géométrie de flotteur principal et de jupes fixée (rayon 13 m, tirant d'eau 20,5 m), une étude paramétrique a été menée afin de savoir quelle hauteur d'eau était nécessaire pour atteindre un angle d'assiette cible suivant la répartition angulaire $\alpha$ et la largeur $l$ de réservoir. La Figure 5 montre ainsi la hauteur d'eau $he$ nécessaire pour obtenir un angle d'assiette de 5° en présence d'une force de poussée aérodynamique de 80 tonnes au centre du rotor situé à 90 m de hauteur pour des largeurs de réservoir $l$ compris entre 1 et 4 m, un angle $\alpha$ compris entre 10 et 45°. La meilleure configuration peut ainsi être choisie suivant les critères retenus (volume de liquide, hauteur métacentrique,...).

Ces résultats montrent qu'une éolienne HAWT ou VAWT montée sur un support flottant tel que celui de la présente invention peut être maintenue suffisamment stable à condition d'un choix spécifique des principaux paramètres de dimensionnement. D'autre part, le ballastage dynamique disposé en combinaison dans le flotteur principal peut avec une assiette correcte pour la récupération d'énergie optimale.

**Revendications**

1. Éolienne offshore sur support flottant, **caractérisée en ce que** ledit support comporte en combinaison:

   - un flotteur principal (1) de forme sensiblement cylindrique,
   - une masse fixe (5) à la base du flotteur,
   - au moins deux éléments circulaires (2, 3) de diamètre supérieur au diamètre du flotteur principal et espacés d'une distance L,
   - des caissons de ballastage (4) inclus dans le flotteur principal, et répartis en couronne à la périphérie dudit flotteur.

2. Éolienne offshore sur support flottant selon la revendication 1, dans laquelle un des éléments circulaires (3) est placé à la base du flotteur principal.

3. Éolienne offshore sur support flottant selon l'une des revendications précédentes, dans laquelle la distance L est déterminée pour obtenir un amortissement et une période propre en pilonnement optimaux compte tenu principalement de la géométrie et de la répartition du poids du support flottant.

4. Éolienne offshore sur support flottant selon l'une des revendications précédentes, dans laquelle un système d'ancrage funiculaire (6) la maintient en place.

5. Éolienne offshore sur support flottant selon l'une des revendications précédentes, dans laquelle l'axe des pales est horizontal.

6. Éolienne offshore sur support flottant selon l'une des revendications 1 à 4, dans laquelle l'axe des pales est vertical.

Figure 1

Figure 2

Figure 3a

Figure 3b

Figure 4a

Figure 4b

Figure 5

Europäisches
Patentamt

European
Patent Office

Office européen
des brevets

**RAPPORT DE RECHERCHE EUROPEENNE**

Numéro de la demande

EP 13 30 6450

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2012/121247 A1 (IHI MARINE UNITED INC [JP]; UNIV TOKYO [JP]; YOSHIMOTO HARUKI [JP]; AW) 13 septembre 2012 (2012-09-13) * figures 1-5c * * alinéas [0009], [0010], [0014], [0018] - [0035], [0040] - [0042] * ----- | 1-6 | INV. F03D11/04 |
| X | US 2012/207600 A1 (HARRIS PETER GRAHAM [GB] ET AL) 16 août 2012 (2012-08-16) * figures 1-7 * * alinéas [0005], [0016], [0017], [0048], [0050], [0051], [0054] - [0059] * ----- | 1,2,4,6 | |
| A | WO 03/004869 A1 (VESTAS WIND SYS AS [DK]; SIEG PER [DK]) 16 janvier 2003 (2003-01-16) * figures 1,4-6 * * pages 2,4-5 * ----- | 1-6 | |
| A | JP 2009 248792 A (PENTA OCEAN CONSTRUCTION; TOKYO ELECTRIC POWER CO) 29 octobre 2009 (2009-10-29) * figures 1-6 * * alinéas [0005], [0012], [0015], [0018], [0027] * ----- | 1-6 | DOMAINES TECHNIQUES RECHERCHES (IPC)  F03D B63B |

Le présent rapport a été établi pour toutes les revendications

| Lieu de la recherche | Date d'achèvement de la recherche | Examinateur |
|---|---|---|
| La Haye | 6 janvier 2014 | Rakotonanahary, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...................................................................................................

& : membre de la même famille, document correspondant

EPO FORM 1503 03.82 (P04C02)

**EP 2 735 735 A1**

**ANNEXE AU RAPPORT DE RECHERCHE EUROPEENNE
RELATIF A LA DEMANDE DE BREVET EUROPEEN NO.**

EP 13 30 6450

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-01-2014

| Document brevet cité au rapport de recherche | | Date de publication | Membre(s) de la famille de brevet(s) | | Date de publication |
|---|---|---|---|---|---|
| WO 2012121247 | A1 | 13-09-2012 | EP<br>WO | 2684792 A1<br>2012121247 A1 | 15-01-2014<br>13-09-2012 |
| US 2012207600 | A1 | 16-08-2012 | CA<br>EP<br>JP<br>KR<br>NZ<br>US<br>WO | 2777813 A1<br>2504571 A2<br>2013508609 A<br>20120103579 A<br>599339 A<br>2012207600 A1<br>2011049843 A2 | 28-04-2011<br>03-10-2012<br>07-03-2013<br>19-09-2012<br>26-04-2013<br>16-08-2012<br>28-04-2011 |
| WO 03004869 | A1 | 16-01-2003 | AUCUN | | |
| JP 2009248792 | A | 29-10-2009 | JP<br>JP | 5022976 B2<br>2009248792 A | 12-09-2012<br>29-10-2009 |

EPO FORM P0460

Pour tout renseignement concernant cette annexe : voir Journal Officiel de l'Office européen des brevets, No.12/82

10